# EUROPEAN PATENT APPLICATION

(11) **EP 2 670 177 A1**
(43) Date of publication of application: **04.12.2013**
(21) Application number: 12752984.0
(22) Date of filing: 09.01.2012
(51) Int. Cl.: H04W 16/02

(54) **COMMUNICATION METHOD, DEVICE AND NODEB APPLIED IN WCDMA SYSTEM**

(30) Priority: 28.02.2011 CN 201110048347
(71) Applicant: Huawei Technologies Co., Ltd., Shenzhen, Guangdong 518129 (CN)
(72) Inventor: WANG, Zongjie, Shenzhen Guangdong 518129 (CN); MA, Xueli, Shenzhen Guangdong 518129 (CN); ZHOU, Huan, Shenzhen Guangdong 518129 (CN)
(74) Representative: Thun, Clemens
(86) International application number: PCT/CN2012/070141
(87) International publication number: WO 2012/116580

(57) **Abstract**

Embodiments of the present invention provide a communication method, a device, and a base station applied in a WCDMA system. The method includes: sending downlink data with same timing via downlink carriers that are respectively configured in a first communication area, a second communication area, and a third communication area; where the first communication area, the second communication area, and the third communication area are communication areas with every two thereof being adjacent to each other; the downlink carriers covered at edges of any two of the first communication area, the second communication area, and the third communication area have different frequencies; and the communication areas serve as communication cells or communication sectors. According to the embodiments of the present invention, downlink data with same timing is sent via a plurality of communication areas, a user equipment can distinguish synchronisation channels in each communication area according to the frequencies of the downlink carriers, thereby implementing that data is sent synchronously in a plurality of communication areas, and avoiding interference to the UE caused by asynchronous sending of data.

## Description

This application claims priority to Chinese Patent Application No. 201110048347.X, filed with the Chinese Patent Office on February 28, 2011 and entitled "COMMUNICATION METHOD, DEVICE, AND BASE STATION APPLIED IN WCDMA SYSTEM", which is incorporated herein by reference in its entirety.

### TECHNICAL FIELD

Embodiments of the present invention relate to the field of communications technologies, and in particular, to a communication method, a device, and a base station applied in a WCDMA system.

### BACKGROUND

WCDMA (Wideband Code Division Multiple Access, Wideband Code Division Multiple Access) is the third generation wireless communication system most widely used currently.

In a WCDMA system, a cell time deviation (T-Cell) needs to be configured for a base station (NodeB) to transmit an SCH (Synchronisation Channel, Synchronisation Channel) pulse signal, and neighboring cells may be configured with different T-Cells to ensure that SCHs of neighboring cells are not overlapped. The cell time deviation (T-Cell) indicates a timing latency of start of an SCH, CPICH (Common Pilot Channel), and DL (Downlink) scrambling code relative to a BFN (NodeB Frame Number) in a cell, namely the T-Cell is the latency of an SFN (System Frame Number) relative to the BFN of a cell. Configuration of different T-Cells for neighboring cells staggers SCHs of each cell for a certain time interval, ensuing that SCHs of any two cells are not overlapped, so as to bring convenience for a UE (User Equipment) to search cells. For example: the T-Cell of a main serving cell is called T-cell 1, the T-Cell of an auxiliary serving cell is called T-Cell 2, and the timing difference between the downlink pilot channels of the two cells is: Δ*_{T_cell} = T _ cell*2*-T_cell*1*.* SCHs of the main serving cell and the auxiliary serving cell are not overlapped, and a UE can search out SCHs of the main serving cell and the auxiliary serving cell.

By continuous evolution, the downlink peak rate of WCDMA has reached 86.4 Mbit/s in the Release-9 version; however, how to improve the edge rate is still a bottleneck of WCDMA. The HSDPA (High Speed Downlink Packet Access) macro diversity technology may be introduced to the same NodeB in order to satisfy rate requirements of edge users and improve user experience.

During HSDPA macro diversity transmission, a plurality of cells may collaborate to send a piece of data. However, when a plurality of cells collaborates to send a piece of data, the data flows sent during collaboration are asynchronous if T-Cells of the cells are different, causing a great interference to the UE during reception.

### SUMMARY

Embodiments of the present invention provide a communication method, a device, and a base station applied in a WCDMA system, so as to implement that a plurality of cells can synchronously send data, thereby avoiding interference to a UE caused by asynchronous sending of data.

An embodiment of the present invention provides a communication method applied in a WCDMA system, including: sending downlink data with same timing via downlink carriers that are respectively configured in a first communication area, a second communication area, and a third communication area; where
the first communication area, the second communication area, and the third communication area are communication areas with every two thereof being adjacent to each other; the downlink carriers covered at edges of any two of the first communication area, the second communication area, and the third communication area have different frequencies; and the communication areas serve as communication cells or communication sectors.

An embodiment of the present invention provides a communication device applied in a WCDMA system, the communication device being included in a base station, and the communication device including:
a sending module, configured to send downlink data with same timing via downlink carriers that are respectively configured in a first communication area, a second communication area, and a third communication area; where
the first communication area, the second communication area, and the third communication area are communication areas with every two thereof being adjacent to each other; the downlink carriers covered at edges of any two of the first communication area, the second communication area, and the third communication area have different frequencies; and the communication areas serve as communication cells or communication sectors.

An embodiment of the present invention provides a base station, including the communication device applied in a WCDMA system provided in the embodiment of the present invention.

As regards the communication method, device, and base station applied in the WCDMA system provided in the embodiments of the present invention, in the first communication area, the second communication area, and the third communication area with every two thereof being adj acent to each other, downlink carriers covered at the edges of any two communication areas have different frequencies, namely downlink carriers respectively covering edge areas of any two neighboring communication areas have different frequencies. Hence, according to the embodiments of the present invention, downlink data with same timing can be sent via a plurality of communication areas. When a user equipment, especially the user equipment located in the edge area of two neighboring communication areas, receives downlink data, the user equipment can distinguish synchronisation channels in each communication area according to the frequencies of downlink carriers. Hence, in the present invention, that data is sent synchronously in a plurality of communication areas can be implemented, thereby avoiding interference to the UE caused by asynchronous sending of data.

### BRIEF DESCRIPTION OF DRAWING(S)

FIG. 1 is a flow chart of Embodiment 1 of a communication method applied in a WCDMA system according to the present invention;
FIG. 2 is a flow chart of Embodiment 2 of a communication method applied in a WCDMA system according to the present invention;
FIG. 3 is a schematic diagram of a carrier configuration manner according to the embodiment shown in FIG. 2;
FIG. 4 is a schematic diagram of another carrier configuration manner according to the embodiment shown in FIG. 2;
FIG. 5 is a flow chart of Embodiment 3 of a communication method applied in a WCDMA system according to the present invention;
FIG. 6 is a schematic diagram of a network distribution manner of the embodiment shown in FIG. 5; and
FIG. 7 is a flow chart of Embodiment 4 of a communication method applied in a WCDMA system according to the present invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

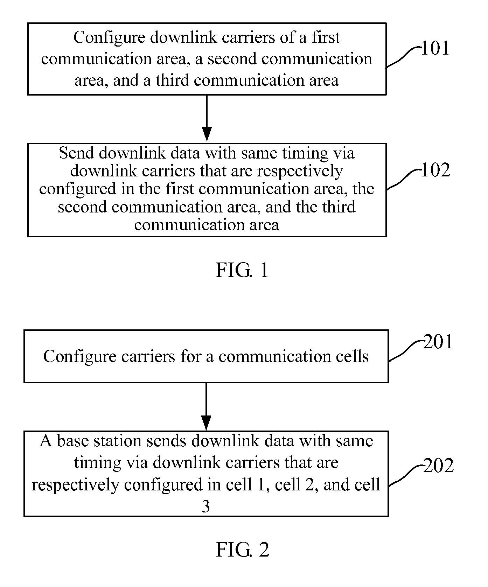

FIG. 1 is a flowchart of Embodiment 1 of a communication method applied in a WCDMA system according to the present invention. As shown in FIG. 1, the method includes:
Step 101. Configure downlink carriers of a first communication area, a second communication area, and a third communication area.

This embodiment is applied to a WCDMA system. In a cellular network of wireless communication, communication cells are cellular, and each communication cell may be further divided into a plurality of sectors, namely the communication sectors as described in this embodiment. The first communication area, the second communication area, and the third communication area may serve as either communication cells or communication sectors; and the first communication area, the second communication area, and the third communication area are any three communication areas with every two thereof being adjacent to each other. A wireless communication network may include a plurality of communication areas, and in these communication areas, the downlink carriers of any three communication areas with every two thereof being adjacent to each other have the same configuration.

Configuring carriers for each communication area in advance may be configuring three or more carriers for each cell. The uplink carriers configured for each communication area are all in full-area coverage, that is, all uplink channels of carriers configured for each communication area are in full-area coverage. By configuring an uplink carrier in such a way in this embodiment, uplink communication in the network is not affected, and a UE may perform soft handover or softer handover as usual in edge areas of each communication area. According to the embodiment of the present invention, each carrier is divided into an uplink carrier and a downlink carrier. The uplink carrier is used to transmit an uplink channel, and the downlink carrier is used to transmit a downlink channel.

The manner of configuring downlink carriers for the first communication area, the second communication area, and the third communication area may include:
configuring more than three downlink carriers for each communication area, in which a plurality of downlink carriers configured for the same communication area have different frequencies, while a plurality of downlink carriers configured for any two communication areas have a same frequency; for example: configuring k downlink carriers 1, 2, ..., k of different frequencies for the first communication area, and configuring k downlink carriers 1', 2', ..., k' of different frequencies for the second communication area; while downlink carriers 1-k and downlink carriers 1'-k' may contain carriers having a same frequency;

in addition, downlink carriers covered at the edges of any two communication areas have different frequencies; among a plurality of downlink carriers configured for each communication area, some downlink carriers may be in full-area coverage, and other downlink carriers may be in center-area coverage; full-area coverage means that downlink data channels sent by the downlink carriers cover an entire communication area, and the entire communication area includes the center area and the edge area of the communication area; center-area coverage means that the downlink data channels sent by the downlink carriers only cover the center area of a communication area, not the edge area of the communication area; downlink carriers covered at an edge of a communication area is the downlink carriers in full-area coverage of the communication area; hence, downlink carriers covered at the edges of any two communication areas have different frequencies, specifically downlink carriers in full-area coverage have different frequencies in the first communication area, the second communication area, and the third communication area.

Step 102. Send downlink data with same timing via downlink carriers that are respectively configured in the first communication area, the second communication area, and the third communication area.

A base station sends a plurality of downlink data via downlink carriers that are respectively configured in the first communication area, the second communication area, and the third communication area. All sent downlink data is with same timing, that is, T-Cell of each communication area is same, and downlink data sent by a base station via a plurality of communication areas is completely synchronized. The downlink data in the embodiment of the present invention may include downlink service data information, or the downlink data may include downlink control information, or the downlink data may include downlink service data information and downlink control information. It should be noted that when the downlink data includes downlink control information, feedback information of an uplink enhanced dedicated channel and fractional dedicated physical information are not contained in the downlink data, and timing of the feedback information of the uplink enhanced dedicated channel may be determined by timing of fractional dedicated physical information of each user. Reference may be made for the prior art for details, which are not detailed herein.

A UE, located in the edge area of any communication area, may receive downlink data sent from two or a plurality of communication areas, then the UE may distinguish synchronisation channels (SCH) of each communication area according to the frequencies of downlink carriers corresponding to the received downlink data; for example: a certain UE, located in the edge area of the first communication area adjacent to the second communication area, may serve both the first communication area and the second communication at the same time, namely the UE may receive downlink data sent by downlink carriers in full-area coverage of the first communication area and the second communication area; since downlink carriers in full-area coverage of the first communication area and the second communication area have different frequencies, the UE may distinguish synchronisation channels according to the frequencies of downlink carriers. In this embodiment, the UE may distinguish synchronisation channels of each communication area according to the frequencies of downlink carriers, instead of distinguishing synchronisation channels of communication areas by T-Cell; therefore, same T-Cell may be adopted for sending downlink data when a plurality of communication areas are coordinated to send downlink data, that is, a plurality of communication areas send downlink data with same timing.

According to the embodiment of the present invention, in the first communication area, the second communication area, and the third communication area with every two thereof being adjacent to each other, downlink carriers covered at the edges of any two communication areas have different frequencies, namely downlink carriers respectively covering edge areas of any two neighboring communication areas have different frequencies. Hence, according to the embodiment of the present invention, downlink data with same timing may be sent via a plurality of communication areas. When a UE, especially the UE located in the edge area of two neighboring communication areas, receives downlink data, the UE can distinguish synchronisation channels in each communication area according to the frequencies of downlink carriers. Hence, in this embodiment, that data is sent synchronously in a plurality of communication areas can be implemented, thereby avoiding interference to the UE caused by asynchronous sending of data.

FIG. 2 is a flowchart of Embodiment 2 of a communication method applied in a WCDMA system according to the present invention, and a communication area in this embodiment means a communication cell. As shown in FIG. 2, the method includes:
Step 201. Configure carriers for communication cells.

In this embodiment, each base station corresponds to a cell, and each cell may support three or more carriers; a first communication area, a second communication area, and a third communication area respectively serve as a first cell, a second cell, and a third cell. Carriers for each communication cell corresponding to a base station are configured in advance.

Uplink carriers of the first cell, the second cell, and the third cell are all in full-area coverage.

The manner of configuring downlink carriers of the first cell, the second cell, and the third cell may include:
configuring at least a first downlink carrier, a second downlink carrier, and a third downlink carrier in the first cell; configuring at least a fourth downlink carrier, a fifth downlink carrier, and a sixth downlink carrier in the second cell; configuring at least a seventh downlink carrier, an eighth downlink carrier, and a ninth downlink carrier in the third cell; it should be noted that each cell is configured with at least three downlink carriers, and may be configured with more downlink carriers according to the need of the specific implementation process;
the downlink data channels of the first downlink carrier, the fourth downlink carrier, and the seventh downlink carrier are all in full-area coverage; the downlink data channels of the second downlink carrier and the third downlink carrier, the fifth downlink carrier and the sixth downlink carrier, and the eighth downlink carrier and the ninth downlink carrier are all in center-area coverage; in addition, the first downlink carrier, the fourth downlink carrier, and the seventh downlink carrier have different frequencies.

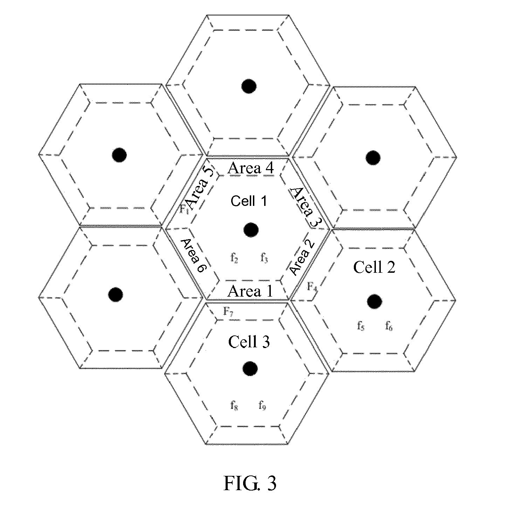

Specifically, a carrier configuration situation in each cell of this embodiment is described with reference to FIG. 3 through an example where each cell is configured with three carriers. FIG. 3 is a schematic diagram of a carrier configuration manner of the embodiment shown in FIG. 2. As shown in FIG. 3:

Cell 1, cell 2, and cell 3 are respectively equivalent to the first cell, the second cell, and the third cell; each cell is configured with three carriers; cell 1 is configured with carrier 1, carrier 2, and carrier 3, in which carrier 1, carrier 2, and carrier 3 have different frequencies, and carrier 1, carrier 2, and carrier 3 are respectively indicated by F₁, f₂, and f₃; cell 2 is configured with carrier 4, carrier 5, and carrier 6, in which carrier 4, carrier 5, and carrier 6 have different frequencies, and carrier 4, carrier 5, and carrier 6 are respectively indicated by F₄, f₅, and f₆; cell 3 is configured with carrier 7, carrier 8, and carrier 9, in which carrier 7, carrier 8, and carrier 9 have different frequencies, and carrier 7, carrier 8, and carrier 9 are respectively indicated by F₇, f₈, and f₉; all uplink channels of carriers 1-9 are in full-cell coverage, namely uplink carriers contained by carriers 1-9 are all in full-cell coverage.

All downlink channels of carrier 1 in cell 1 are in full-cell coverage, in which downlink data channels including carrier 1 (F₁) are in full-cell coverage, that is, downlink carriers included in carrier 1 are in full-cell coverage, and the full-cell coverage means that both the center area and the edge area of cell 1 are covered; downlink data channels of carrier 2 (f₂) and carrier 3 (f₃) of cell 1 are only in center-area coverage, where the downlink data channel may be an HSDPA (High Speed Downlink Packet Access) channel, and an HSDPA channel may include HS-PDSCH (High-Speed Physical Downlink Shared Channel) and HS-SCCH (Shared Control Channel for HS-DSCH, namely shared control channel for high-speed downlink shared channel); in this case, the center area of cell 1 may have downlink data channels of three carriers, while the edge areas only have the downlink data channels of one carrier (carrier 1).

Furthermore, downlink common pilot channels (Common Pilot Channel, hereinafter referred to as CPICH) of carrier 2 and carrier 3 may be in full-cell coverage, so as to ensure that a UE, located in an edge area of cell 1, may perform operations such as measurement, handover, and sending uplink data on carrier 2 and carrier 3; downlink fractional dedicated physical channels (F-DPCH, Fractional Dedicated Physical Channel) of carrier 2 and carrier 3 may be in full-cell coverage, so as to ensure that a UE, located in an edge area of cell 1, may properly perform inner-loop power control; the following downlink channels including uplink feedback channel E-HICH (E-DCH HARQ Acknowledgement Indicator Channel, uplink enhanced dedicated channel hybrid automatic repeat request indicator channel), E-RGCH (E-DCH Relative Grant Channel, uplink enhanced dedicated channel relative grant channel), and E-AGCH (E-DCH Absolute Grant Channel, uplink enhanced dedicated channel absolute grant channel) of carrier 2 and carrier 3 may also be in full-cell coverage, so as to ensure that a UE in an edge area may properly send uplink data. Other downlink channels, except downlink CPICH, downlink F-DPCH, E-HICH, E-RGCH, and E-AGCH, of carrier 2 and carrier 3 are all in center-area coverage; it should be noted that all carrier 1, carrier 2, and carrier 3 may send downlink synchronisation channels (hereinafter referred to as SCH), or only carrier 1 sends the downlink SCH, while carrier 2 and carrier 3 do not send the downlink SCH; when all carrier 1, carrier 2, and carrier 3 send downlink SCHs, downlink SCHs that are sent by carrier 2 and carrier 3 are in center-area coverage.

All downlink channels of carrier 4 of cell 2 are in full-cell coverage, in which downlink data channels including carrier 4 (F₄) are in full-cell coverage, namely downlink carriers included in carrier 4 are in full-cell coverage, and the full-cell coverage means that both the center area and the edge area of cell 2 are covered; downlink data channels of carrier 5 (f₅) and carrier 6 (f₆) of cell 2 are only in center-area coverage; in this case, the center area of cell 2 may have downlink data channels of three carriers, while the edge areas only have downlink data channels of one carrier (carrier 4).

The configurations of carrier 5 and carrier 6 of cell 2 may be equal to the configurations of carrier 2 and carrier 3 of cell 1.

All downlink channels of carrier 7 of cell 3 are in full-cell coverage, in which downlink data channels including carrier 7 (F₇) are in full-cell coverage, namely downlink carriers included in carrier 7 are in full-cell coverage, and the full-cell coverage means that both the center area and the edge area of cell 3 are covered; downlink data channels of carrier 8 (f₈) and carrier 9 (f₉) of cell 3 are only in center-area coverage; in this case, the center area of cell 3 may have downlink data channels of three carriers, while the edge areas only have downlink data channels of one carrier (carrier 7).

The configurations of carrier 8 and carrier 9 of cell 3 may be equal to the configurations of carrier 2 and carrier 3 of cell 1.

In foregoing configurations, carrier 1, carrier 4, and carrier 7 have different frequencies, and therefore downlink carriers covered at the edge areas of cell 1, cell 2, and cell 3 have different frequencies.

As shown in FIG. 3, areas located at an edge of a cell are edge areas of the cell, for example: areas 1-6 are edge areas of cell 1. Edge areas of each cell are soft handover areas, and a UE located in a soft handover area may serve two or three different cells concurrently, namely a UE located in a soft handover area may receive downlink data sent from two or three cells; for example: a UE in area 1 may serve cell 1 and cell 3 concurrently, namely the UE in area 1 may receive downlink data sent from cell 1 and cell 3 respectively via carrier 1 and carrier 7, or the UE in area 1 may serve cell 1, cell 2, and cell 3 concurrently, namely the UE in area 1 may receive downlink data sent from cell 1, cell 2, and cell 3 respectively via carrier 1, carrier 4, and carrier 7. Based on the above, carrier 1, carrier 4, and carrier 7 have different frequencies, and therefore the UE in area 1 can distinguish downlink SCHs of each cell according to the frequencies of downlink carriers corresponding to received downlink data, namely distinguish which cell received downlink data is sent from according to the frequency. Therefore, T-Cells of cell 1, cell 2, and cell 3 may be set to a same value, thereby implementing coordinated transmission of a plurality of cells with same timing.

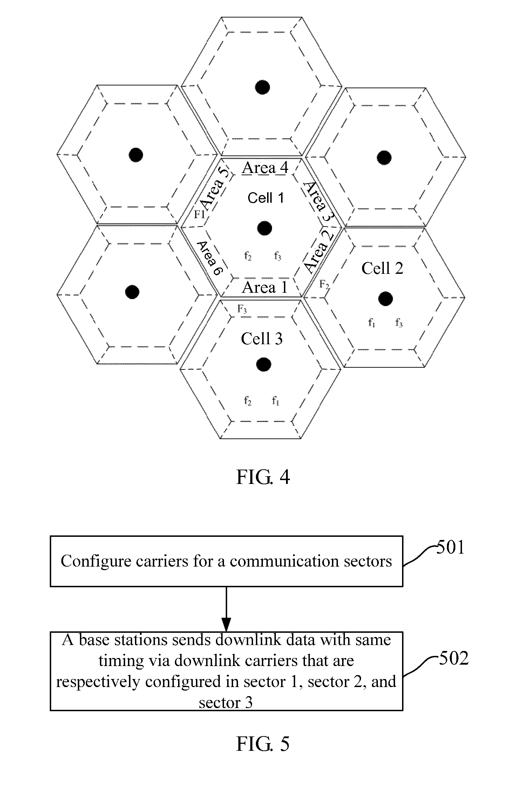

It should be noted that among the 9 carriers of carriers 1-9, some carriers may have different frequencies, while others may have a same frequency. The situation that some carriers have a same frequency is specifically that: carrier 1, carrier 5, and carrier 9 have a same frequency, and/or carrier 4, carrier 2, and carrier 8 have a same frequency, and/or carrier 7, carrier 3, and carrier 6 have a same frequency. If two carriers have a same frequency, downlink carriers respectively included by the two carriers have a same frequency. When carrier 1, carrier 5, carrier 9 have a same frequency, carrier 4, carrier 2, and carrier 8 have a same frequency, and carrier 7, carrier 3, and carrier 6 have a same frequency, it is equivalent to that cell 1, cell 2, and cell 3 are all configured with carrier 1, carrier 2, and carrier 3. Another configuration situation of carriers is described in the following with reference to FIG. 4.

FIG. 4 is a schematic diagram of another carrier configuration manner of the embodiment shown in FIG. 2. As shown in FIG. 4:
Cell 1, cell 2, and cell 3 are respectively configured with carrier 1, carrier 3, and carrier 3. Configurations of carrier 1 (indicated by F₁), carrier 2 (indicated by f₂), and carrier 3 (indicated by f₃) of cell 1 are same to the configurations of carrier 1, carrier 2, and carrier 3 of cell 1 in FIG. 3; configurations of carrier 2 (indicated by F₂), carrier 1 (indicated by f₁), and carrier 3 (indicated by f₃) of cell 2 are same to the configurations of carrier 4, carrier 5, and carrier 6 of cell 2 in FIG. 3; configurations of carrier 3 (indicated by F₃), carrier 2 (indicated by f₂), and carrier 1 (indicated by f₁) of cell 3 are same to the configurations of carrier 7, carrier 8, and carrier 9 of cell 3 in FIG. 3.

This embodiment is described through an example where each cell is configured with three carriers. For other implementation manners, each cell may be configured with more than three carriers, in which case, only by ensuring that downlink carriers respectively covering edge areas of any two neighboring cells have different frequencies, coordinated transmission of downlink data by a plurality of cells with same timing can be implemented.

Step 202. A base station sends downlink data with same timing via downlink carriers that are respectively configured in cell 1, cell 2, and cell 3.

After carrier configuration of cell 1, cell 2, and cell 3 are completed, base stations in cell 1, cell 2, and cell 3 may send downlink data with same timing.

In this embodiment, in cell 1, cell 2, and cell 3 with every two thereof being adjacent to each other, downlink carriers covered at the edges of any two cells have different frequencies; and therefore a plurality of base stations may send downlink data with same timing via a plurality of cells. When a UE located in an edge area of two neighboring cells receives downlink data, the UE can distinguish downlink synchronisation channels of each cell according to the frequencies of downlink carriers. Hence, in this embodiment, that data is sent synchronously in a plurality of cells can be implemented, thereby avoiding interference to the UE caused by asynchronous sending of data.

FIG. 5 is a flowchart of Embodiment 3 of a communication method applied in a WCDMA system according to the present invention, and a communication area in this embodiment means a communication sector. As shown in FIG. 5, the method includes:
Step 501. Configure carriers for communication sectors.

In this embodiment, each base station corresponds to a sector, and each cell may be divided into three sectors, in which any three sectors with every two thereof being adjacent to each other mean a first communication area, a second communication area, and a third communication area; in this embodiment, the first communication area, the second communication area, and the third communication area serve as a first sector, a second sector, and a third sector.

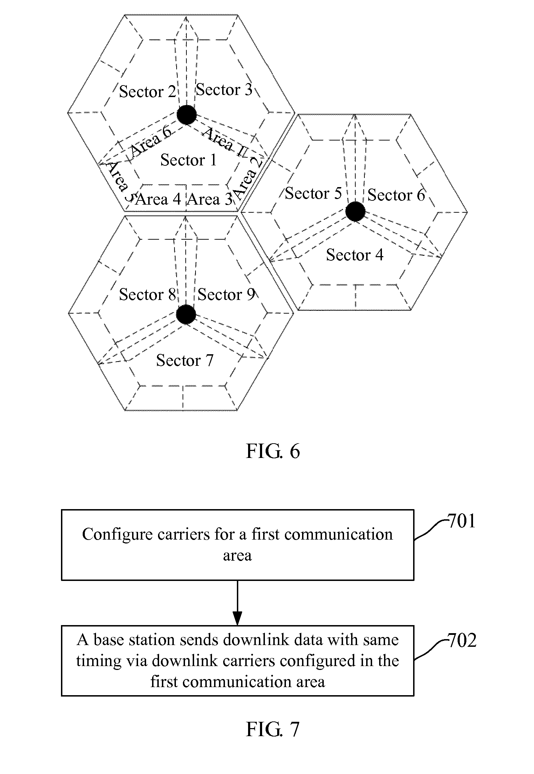

Here, the first sector, the second sector, and the third sector may be located in the same cell, or any two of the first sector, the second sector, and the third sector are located in the same cell, or the first sector, the second sector, and the third sector are respectively located in different cells. As shown in FIG. 6, FIG. 6 is a schematic diagram of a network distribution manner of the embodiment shown in FIG. 5, where sector 1, sector 2, and sector 3 are located in the same cell, sector 4, sector 5, and sector 6 are located in the same cell, and sector 7, sector 8, and sector 9 are located in the same cell; in which, sector 1, sector 2, and sector 3 may be the first sector, the second sector, and the third sector with every two thereof being adjacent to each other as described in this embodiment; or sector 1, sector 3, and sector 5 may be the first sector, the second sector, and the third sector with every two thereof being adjacent to each other as described in this embodiment; or sector 1, sector 5, and sector 9 may be the first sector, the second sector, and the third sector with every two thereof being adjacent to each other as described in this embodiment. Areas 1-6 in sector 1 shown in FIG. 6 are the edge areas of sector 1, equivalent to areas 1-6 of cell 1 in FIG. 3.

In this embodiment, the carrier configuration manner of the first sector, the second sector, and the third sector is same to the carrier configuration manner of the first cell, the second cell, and the third cell in the embodiment shown in FIG. 2 to FIG. 4, which is not detailed herein.

Step 502. A base station sends downlink data with same timing via downlink carriers that are respectively configured in the first sector, the second sector, and the third sector.

After carrier configurations of the first sector, the second sector, and the third sector are completed, base stations located in the first sector, the second sector, and the third sector may send downlink data with same timing.

Here, a neighboring edge area of two sectors in the same cell is a softer handover area, and a neighboring edge area of two sectors in different cells is a soft handover area, for example: areas 1 and 6 in sector 1 are softer handover areas, and areas 2-5 in sector 1 are soft handover areas. UEs located in a softer handover area and a soft handover area may receive downlink data sent by a plurality of sectors, for example: a UE in area 1 may receive downlink data sent by sector 1 and sector 3, and a UE in area 2 may receive downlink data sent by sector 1 and sector 5. Since downlink carriers covered at the edges of sector 1 and sector 3 have different frequencies, and downlink carriers covered at the edges of sector 1 and sector 5 also have different frequencies, UEs in area 1 and area 2 can distinguish downlink SCHs of each sector according to the frequencies of downlink carriers corresponding to received downlink data, thereby implementing coordinated transmission of downlink data by a plurality of sectors with same timing.

In this embodiment, in the first sector, the second sector, and the third sector with every two thereof being adj acent to each other, downlink carriers covered at the edges of any two sectors have different frequencies; and therefore one or a plurality of base stations can send downlink data with same timing via a plurality of sectors. When a UE located in an edge area of two neighboring sectors receive downlink data, the UE can distinguish downlink synchronisation channels of each sector according to the frequencies of downlink carriers. Therefore, in this embodiment, that data is sent synchronously in a plurality of sectors can be implemented, thereby avoiding interference to the UE caused by asynchronous sending of data.

An embodiment of the present invention further provides a communication device applied in a WCDMA system, and the device is contained in a base station. The device may include: a sending module.

The sending module is configured to send downlink data with same timing via downlink carriers that are respectively configured in a first communication area, a second communication area, and a third communication area.

Here, the first communication area, the second communication area, and the third communication area are communication areas with every two thereof being adjacent to each other; the downlink carriers covered at edges of any two of the first communication area, the second communication area, and the third communication area have different frequencies; and the communication areas serve as communication cells or communication sectors.

Specifically, for working principles and working procedures of the communication device provided in this embodiment, refer to the descriptions of the method embodiment shown in FIG. 1 to FIG. 6, which are not detailed herein.

According to the embodiment of the present invention, in the first communication area, the second communication area, and the third communication area with every two thereof being adjacent to each other, downlink carriers covered at the edges of any two communication areas have different frequencies, namely downlink carriers respectively covering edge areas of any two neighboring communication areas have different frequencies. Hence, the sending module can send downlink data with same timing via a plurality of communication areas. When a UE, especially the UE located in the edge area of two neighboring communication areas, receives downlink data, the UE can distinguish synchronisation channels of each communication area according to the frequencies of downlink carriers. Hence, in this embodiment, that data is sent synchronously in a plurality of communication areas can be implemented, thereby avoiding interference to the UE caused by asynchronous sending of data.

An embodiment of the present invention further provides a base station, including the communication device applied in a WCDMA system provided in an embodiment of the present invention. For working principles and working procedures of the base station in this embodiment, refer to the descriptions of the method embodiment shown in FIG. 1 to FIG. 6, which are not detailed herein. This embodiment has beneficial effects as described in foregoing embodiments.

FIG. 7 is a flowchart of Embodiment 4 of a communication method applied in a WCDMA system according to the present invention. As shown in FIG. 7, the method includes:
Step 701. Configure downlink carriers for a first communication area.

This embodiment is applied to a WCDMA system. In a cellular network of wireless communication, communication cells are cellular, and each communication cell may be further divided into a plurality of sectors, namely the communication sectors as described in this embodiment. Here, the first communication area may serve as either a communication cell or a communication sector, and the first communication area is a random communication area of a wireless communication network.

Configuring carriers for the first communication area in advance may be configuring three or more carriers for each cell. The uplink carriers configured for the first communication area are all in full-area coverage, that is, all uplink channels of carriers configured for the first communication area are in full-area coverage. By configuring an uplink carrier in such a way in this embodiment, uplink communication in the network is not affected, and a UE may perform soft handover or softer handover as usual in edge areas of each communication area. According to the embodiment of the present invention, each carrier is divided into an uplink carrier and a downlink carrier. The uplink carrier is used to transmit an uplink channel, and the downlink carrier is used to transmit a downlink channel.

The manner of configuring downlink carriers for the first communication area may include:
Configuring more than three downlink carriers for the first communication area, which have different frequencies; for example: k downlink carriers 1, 2, ..., k with different frequencies are configured for the first communication area; among the k downlink carriers, one or a plurality of downlink carriers are in full-area coverage, and other downlink carriers except the downlink carriers in full-area coverage are in center-area coverage; in addition, at least one of the k downlink carriers is in center-area coverage. Full-area coverage means that downlink data channels sent by downlink carriers cover the entire first communication area, which includes the center area and the edge area of the first communication area; center-area coverage means that downlink data channels sent by downlink carriers only cover the center area of the first communication area, not covering the edge area of the first communication area; downlink carriers covered at an edge of the first communication area are the downlink carriers in full-area coverage in the first communication area.

An example where the first communication area is configured with three carriers is specifically described in the following, in which the first communication area is exemplified using cell 1:
cell 1 is configured with carrier 1, carrier 2, and carrier 3, in which carrier 1, carrier 2, and carrier 3 have different frequencies, and carrier 1, carrier 2, and carrier 3 are respectively indicated by F₁, f₂, and f₃; all uplink channels of carriers 1-3 are all in full-cell coverage, namely uplink carriers included in carriers 1-3 are all in full-cell coverage;
all downlink channels of carrier 1 are in full-cell coverage, including downlink data channels of carrier 1 (F₁) in full-cell coverage, namely downlink carriers included in carrier 1 are in full-cell coverage, and full-cell coverage means that both the center area and the edge area of cell 1 are covered; downlink data channels of carrier 2 (f₂) and carrier 3 (f₃) of cell 1 are only in center-area coverage; in which, the downlink data channel may be an HSDPA channel, which may include HS-PDSCH and HS-SCCH; in this case, the center area of cell 1 may have downlink data channels of three carriers, while the edge areas only have downlink data channels of one carrier (carrier 1).

Furthermore, downlink common pilot channels (hereinafter referred to as CPICH) of carrier 2 and carrier 3 may be in full-cell coverage, so as to ensure that a UE, located in an edge area of cell 1, may perform operations such as measurement, handover, and sending uplink data on carrier 2 and carrier 3; downlink fractional dedicated physical channels (F-DPCH) of carrier 2 and carrier 3 may be in full-cell coverage, so as to ensure that a UE, located in an edge area of cell 1, may properly perform inner-loop power control; the following downlink channels including uplink feedback channel E-HICH, E-RGCH, and E-AGCH of carrier 2 and carrier 3 may also be in full-cell coverage, so as to ensure that a UE in an edge area may properly send uplink data. Other downlink channels, except downlink CPICH, downlink F-DPCH, E-HICH, E-RGCH, and E-AGCH, of carrier 2 and carrier 3 are all in center-area coverage; it should be noted that all carrier 1, carrier 2, and carrier 3 may send downlink synchronisation channels (SCH), or only carrier 1 sends the downlink SCH, while carrier 2 and carrier 3 do not send the downlink SCH; when all carrier 1, carrier 2, and carrier 3 send downlink SCHs, downlink SCHs that are sent by carrier 2 and carrier 3 are in center-area coverage.

This embodiment is described through an example where carrier 2 and carrier 3 have downlink data channels only in center-area coverage, and in another implementation manner, only carrier 2 (or carrier 3) may have downlink data channels in center-area coverage while the other two carriers have downlink data channels in full-area coverage; that is, at least one carrier has downlink data channels in center-area coverage in solutions provided in this embodiment.

It should be noted that for carrier configurations of all communication areas of a wireless communication network, reference may be made to the carrier configurations of foregoing first communication area.

Step 702. A base station sends downlink data via downlink carriers configured in the first communication area.

After carrier configurations of each communication area of a base station are completed, the base station may send downlink data via the configured downlink carriers.

According to the embodiment of the present invention, each communication area is configured with a plurality of carriers, among which some are in full-area coverage while the others are in center-area coverage. Therefore, compared with the prior art of all carriers in full-area coverage, the carrier configuration manner provided in this embodiment has fewer carriers covered at the edge of a communication area, thereby reducing frequency interference of neighboring communication areas.

Furthermore, carriers covered at the edges of any two neighboring communication areas may have a same frequency or different frequencies. If carriers covered at the edges of any two neighboring communication areas have a same frequency, frequency interference of neighboring communication areas can be reduced in this embodiment; if carriers covered at the edges of any two neighboring communication areas have different frequencies, refer to descriptions of embodiments shown in FIG. 1 to FIG. 6, which are not detailed herein.

An embodiment of the present invention further provides a communication device applied in a WCDMA system, and the device is contained in a base station. The device is used to implement the method embodiment shown in FIG. 7 and may include: a data sending module.

The data sending module is configured to send downlink data via downlink carriers configured in a first communication area.

Here, the manner of configuring downlink carriers for the first communication area in advance is that: configuring more than three downlink carriers for the first communication area, where the downlink carriers have different frequencies; among these downlink carriers, one or a plurality of downlink carriers may be in full-area coverage, other downlink carriers except downlink carriers in full-area coverage may be in center-area coverage.

For the specific manner of configuring carriers for the first communication area, reference may be made to descriptions of the embodiment in FIG. 7; for working principles and working procedures of the communication device provided in this embodiment, refer to the descriptions of the method embodiment shown in FIG. 7, which are not detailed herein.

In the embodiment of the present invention, each communication area is configured with a plurality of carriers, among which some carriers are in full-area coverage while the other carriers are in center-area coverage. Therefore according to the carrier configuration manner provided in this embodiment, there are fewer carriers covered at an edge of a communication area, thereby reducing frequency interference between neighboring communication areas when a communication device works.

An embodiment of the present invention further provides a base station, including the communication device applied in a WCDMA system provided in the embodiment of the present invention. For working principles and working procedures of the base station in this embodiment, refer to the descriptions of the method embodiment shown in FIG 7, which are not detailed herein.

Persons of ordinary skills in the art may understand that all or part of steps of the methods in the embodiments may be implemented by a computer program instructing relevant hardware. The program may be stored in a computer readable storage medium. When the program is run, the steps of the methods in the embodiment are performed. The above storage medium includes various mediums capable of storing program code, such as a read-only memory (ROM), a random access memory (RAM), a magnetic disk or an optical disk, and the like.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, as long as such modifications or replacements do not cause the essence of corresponding technical solutions to depart from the scope of the present invention.

## Claims

1. A communication method applied in a Wideband Code Division Multiple Access WCDMA system, comprising:
sending downlink data with same timing via downlink carriers that are respectively configured in a first communication area, a second communication area, and a third communication area; wherein
the first communication area, the second communication area, and the third communication area are communication areas with every two thereof being adjacent to each other; the downlink carriers covered at edges of any two of the first communication area, the second communication area, and the third communication area have different frequencies; and the communication areas serve as communication cells or communication sectors.

2. The method according to claim 1, wherein the manner of configuring downlink carriers for the first communication area, the second communication area, and the third communication area comprises:
configuring at least a first downlink carrier, a second downlink carrier, and a third downlink carrier in the first communication area; configuring at least a fourth downlink carrier, a fifth downlink carrier, and a sixth downlink carrier in the second communication area; and configuring at least a seventh downlink carrier, an eighth downlink carrier, and a ninth downlink carrier in the third communication area; wherein
downlink data channels of the first downlink carrier, the fourth downlink carrier, and the seventh downlink carrier are all in full-area coverage; and downlink data channels of the second downlink carrier and the third downlink carrier, the fifth downlink carrier and the sixth downlink carrier, and the eighth downlink carrier and the ninth downlink carrier are all in center-area coverage; and
the first downlink carrier, the fourth downlink carrier, and the seventh downlink carrier have different frequencies.

3. The method according to claim 2, wherein the first downlink carrier, the fifth downlink carrier, and the ninth downlink carrier have a same frequency.

4. The method according to claim 3, wherein the fourth downlink carrier, the second downlink carrier, and the eighth downlink carrier have a same frequency.

5. The method according to claim 4, wherein the seventh downlink carrier, the third downlink carrier, and the sixth downlink carrier have a same frequency.

6. The method according to any one of claims 2 to 5, wherein the downlink data channels comprise: a high-speed physical downlink shared channel and a shared control channel for high-speed downlink shared channel.

7. The method according to any one of claims 2 to 5, wherein:
all downlink channels of the first downlink carrier, the fourth downlink carrier, and the seventh downlink carrier are in full-area coverage; and
downlink common pilot channels, downlink fractional dedicated physical channels, uplink enhanced dedicated channel hybrid automatic repeat request indicator channels E-HICH, uplink enhanced dedicated channel relative grant channels E-RGCH, and uplink enhanced dedicated channel absolute grant channels E-AGCH of the second downlink carrier and the third downlink carrier, the fifth downlink carrier and the sixth downlink carrier, and the eighth downlink carrier and the ninth downlink carrier are all in full-area coverage; and other downlink channels except the downlink common pilot channels, downlink fractional dedicated physical channels, E-HICH, E-RGCH, and E-AGCH of the second downlink carrier and the third downlink carrier, the fifth downlink carrier and the sixth downlink carrier, and the eighth downlink carrier and the ninth downlink carrier are all in center-area coverage.

8. The method according to claim 7, wherein the manner of configuring downlink carriers for the first communication area, the second communication area, and the third communication area further comprises:
sending downlink synchronisation channels on the first downlink carrier, the fourth downlink carrier, and the seventh downlink carrier; and not sending downlink synchronisation channels on other downlink carriers; or
sending downlink synchronisation channels on all downlink carriers of the first communication area, the second communication area, and the third communication area.

9. A communication device applied in a Wideband Code Division Multiple Access WCDMA system, the communication device being comprised in a base station, and the communication device comprising:
a sending module, configured to send downlink data with same timing via downlink carriers that are respectively configured in a first communication area, a second communication area, and a third communication area; wherein
the first communication area, the second communication area, and the third communication area are communication areas with every two thereof being adjacent to each other; the downlink carriers covered at edges of any two of the first communication area, the second communication area, and the third communication area have different frequencies; and the communication areas serve as communication cells or communication sectors.

10. A base station, comprising the communication device applied in a Wideband Code Division Multiple Access WCDMA system according to claim 9.
